# EUROPEAN PATENT APPLICATION

(11) **EP 4 757 456 A1**
(43) Date of publication of application: **10.06.2026**
(21) Application number: 24849390.0
(22) Date of filing: 02.07.2024
(51) Int. Cl.: H04W 72/0453, H04W 72/0446, H02J 50/00, H02J 50/20, H02J 50/80, H04L 27/26, H04L 67/12

(54) **COMMUNICATION METHOD AND DEVICE BASED ON CARRIER WAVE SIGNAL**

(30) Priority: 03.08.2023 KR 20230101666
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Maikowski & Ninnemann Patentanwälte Partnerschaft mbB
(86) International application number: PCT/KR2024/009257
(87) International publication number: WO 2025/028819

(57) **Abstract**

Provided are a method by which a first device communicates wirelessly and a device supporting same. The first device may: perform first transmission to a second device; and perform second transmission by reflecting a carrier wave (CW) signal received from the second device in response to the first transmission. For example, the first transmission may include at least one of information or data for requesting the CW signal.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method for performing wireless communication by a first device may be provided. For example, the method may comprise: performing first transmission to a second device; and performing second transmission by reflecting a carrier wave (CW) signal received from the second device in response to the first transmission. For example, the first transmission may include at least one of data or information for requesting the CW signal.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: performing first transmission to a second device; and performing second transmission by reflecting a carrier wave (CW) signal received from the second device in response to the first transmission. For example, the first transmission may include at least one of data or information for requesting the CW signal.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: performing first transmission to a second device; and performing second transmission by reflecting a carrier wave (CW) signal received from the second device in response to the first transmission. For example, the first transmission may include at least one of data or information for requesting the CW signal.

Based on an embodiment of the present disclosure, a non-transitory computer-readable storage medium storing instructions may be provided. For example, the instructions, when executed, may cause a first device to perform operations comprising: performing first transmission to a second device; and performing second transmission by reflecting a carrier wave (CW) signal received from the second device in response to the first transmission. For example, the first transmission may include at least one of data or information for requesting the CW signal.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a topology (e.g., topology 1) directly connected between a base station and an A-IoT device, based on an embodiment of the present disclosure.
FIG. 10 shows a topology (e.g., topology 2) in which a base station and an A-IoT device are connected through an intermediate node, based on an embodiment of the present disclosure.
FIG. 11 shows a topology (e.g., topology 3) supported by an assisting node, based on an embodiment of the present disclosure.
FIG. 12 shows a topology (e.g., topology 4) directly connected between a UE and an A-IoT device, based on an embodiment of the present disclosure.
FIG. 13 shows examples of a device energy state and power consumption according to an operation state of an energy harvesting-based device equipped with energy storage capability, based on an embodiment of the present disclosure.
FIG. 14 shows a method for a first device to perform wireless communication, based on an embodiment of the present disclosure.
FIG. 15 shows a method for a second device to perform wireless communication, based on an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

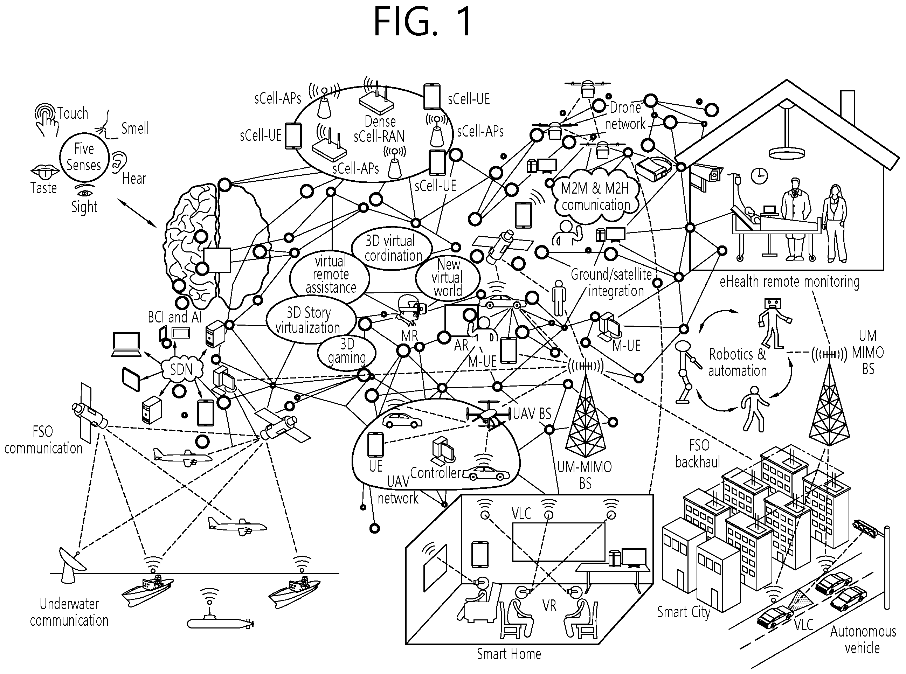

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

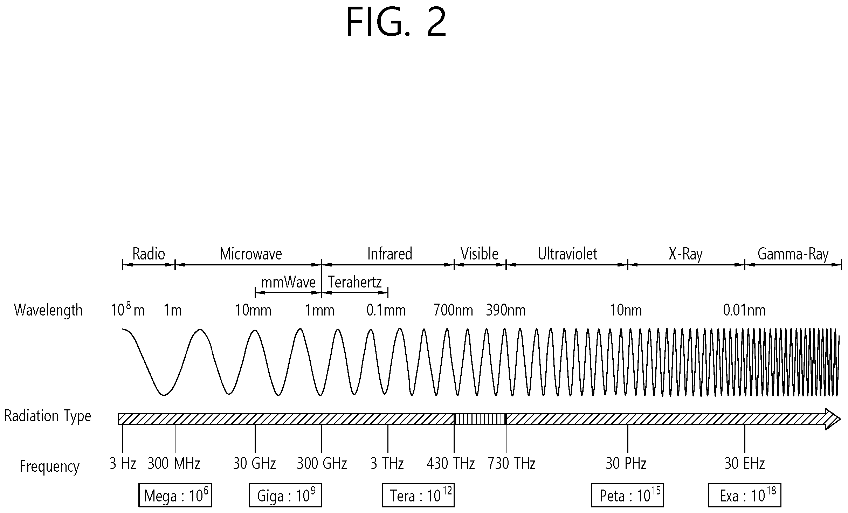

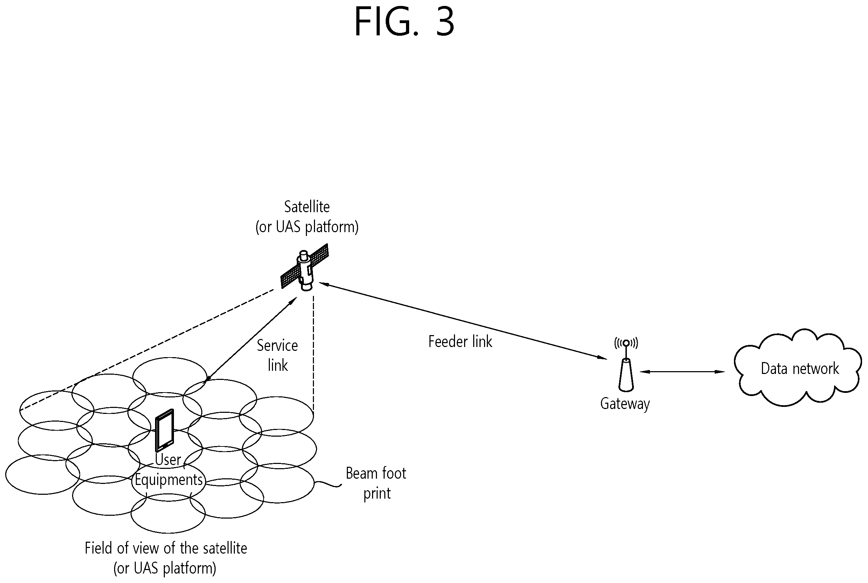

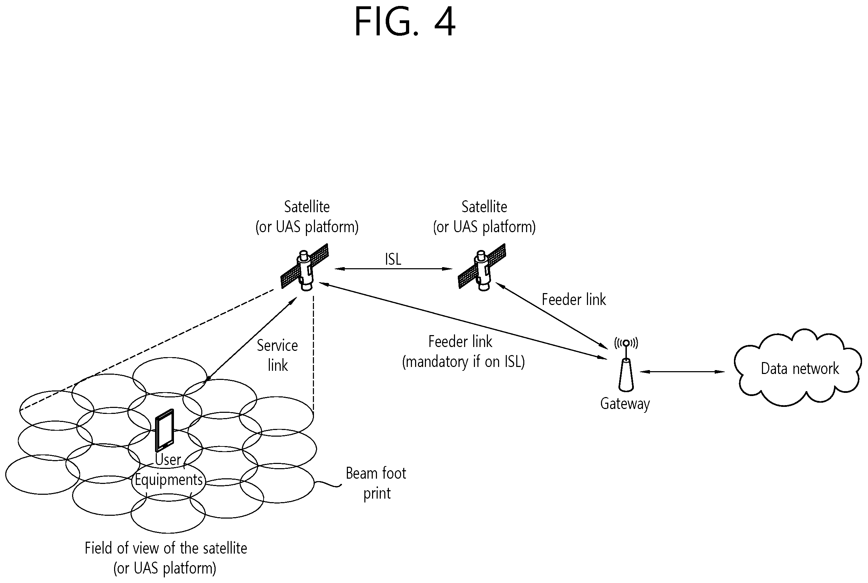

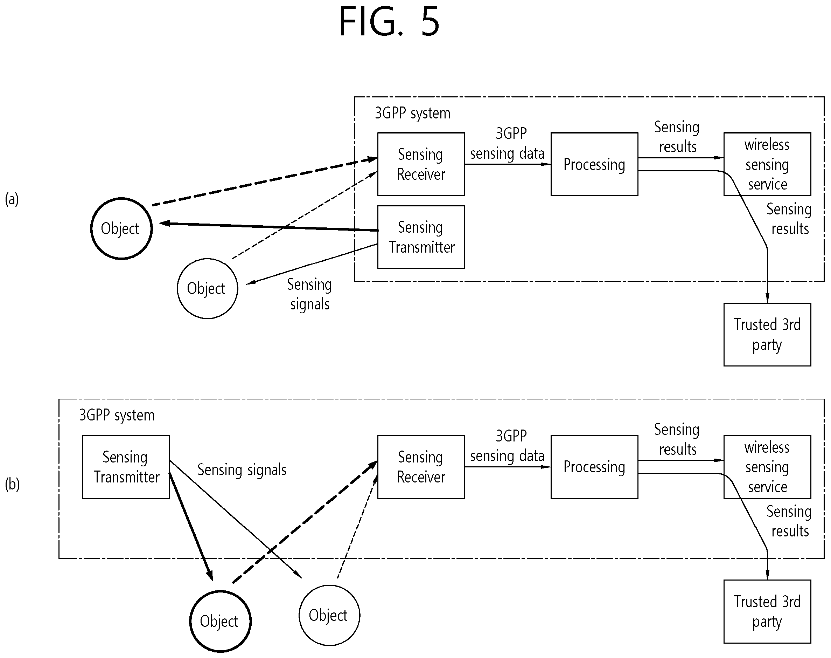

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

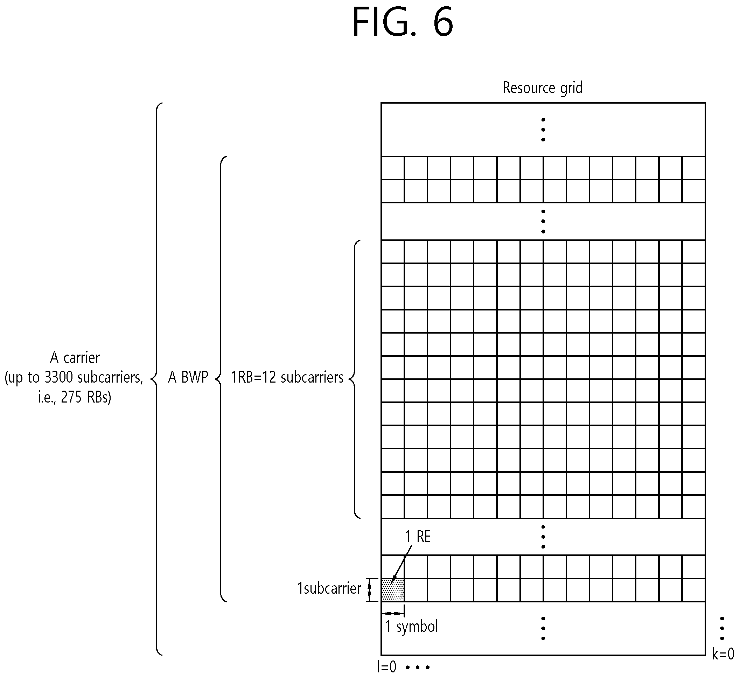

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

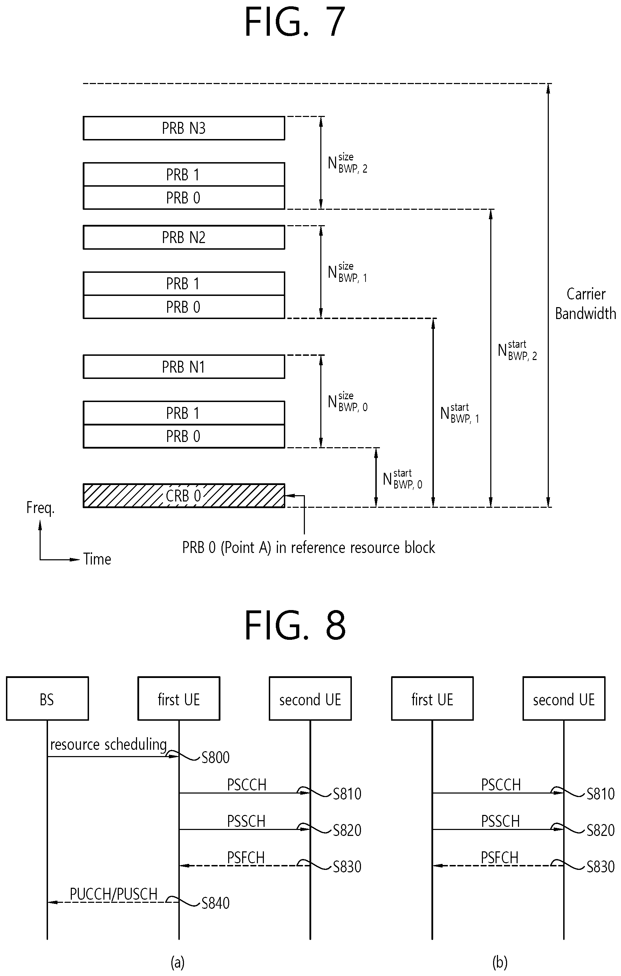

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, the 1^{st}-stage SCI format may include a SCI format 1-A and/or a SCI format 1-B, and the 2^{nd}-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

**[Table 3]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in a next-generation system, a plurality of IoT UEs may communicate with a base station and/or communication between a plurality of IoT UEs may be performed. In this case, as part of a method for lowering implementation complexity and management complexity of the IoT UE, a battery for processing and/or RF transmission and/or reception itself may not exist or may exist limitedly. Instead of having or using its own RF circuit in transmitting an RF signal, the IoT UE may provide/transmit information to a base station and/or another IoT UE and/or an assisting node in the form of reflecting (hereinafter, a backscattering scheme) an RF signal and/or a continuous wave signal received from another node (accompanied by converting phase and/or frequency and/or time and/or amplitude, etc.). The IoT UE may perform energy harvesting (e.g., obtaining energy from external factors such as vibration, sound, solar heat, electromagnetic induction, etc.) and/or obtain power for processing through RF signal reception, etc. For convenience of description, the IoT may be referred to as Ambient IoT (A-IoT).

Hereinafter, Ambient IoT (A-IoT) will be described.

A-IoT may be a new device type/segment operating only with energy harvested from a surrounding environment. For example, A-IoT may refer to a new kind of Internet of Things device of a scheme that operates by being supplied with power through various energy sources harvestable from a surrounding environment, such as radio waves, light, movement, and thermal energy. Table 4 shows examples of use cases of A-IoT.

**[Table 4]**

| | |
|---|---|
| Inventory | Smart labeling/identification in warehouse, supply chain, airport shipping, manufacturing, logistics, retail, etc. |
| Sensor | Environment sensing in smart farm, smart city, smart home, smart grid, etc. |
| Positioning | Location tracking and ranging in indoor/outdoor for assets, products, personal item tracking, etc. |
| Command | Actuator, device activation/deactivation, electronic labeling, etc. |

For example, active signal generation and/or backscattering may be one of communication technologies considered to achieve low-power operation of an A-IoT device. For example, backscattering is a technology widely used in radio frequency identification (RFID) and may enable a device to communicate with a network by reflecting incident waves after modulating with information to be delivered. For example, the device may be supplied with power by an incident RF signal or stored energy.

For example, A-IoT devices may be classified into various device types such as passive, semi-passive, and active according to energy storage and transmission signal generation schemes. For example, a passive device may not have an energy storage device (e.g., a capacitor) and may communicate based on backscattering communication technology. For example, a semi-passive device may have an energy storage device and may communicate using backscattering communication technology with the help of the energy storage device. For example, an active device may have an energy storage device and may communicate by actively generating a signal using active RF components and stored energy. For example, in the present disclosure, the following three types of IoT devices may be considered. For example, device A may be a device without energy storage and without independent signal generation (e.g., a device supporting backscattering transmission). For example, device B may be a device with energy storage and without independent signal generation (e.g., a device supporting backscattering transmission). In this case, for example, use of stored energy may include amplification for a reflected signal. For example, device C may be a device with energy storage and with independent signal generation (e.g., a device with an active RF component for transmission).

For example, the following basic topologies may be considered to support A-IoT devices in indoor and outdoor scenarios. For example, basic topologies may include a base station-A-IoT device direct connection, a base station-intermediate node-A-IoT device connection, connection support by an assisting node, and/or a UE-A-IoT device connection. The basic topologies proposed in the present disclosure is only an example, and the proposal of the present disclosure may be extended/applied to other topologies.

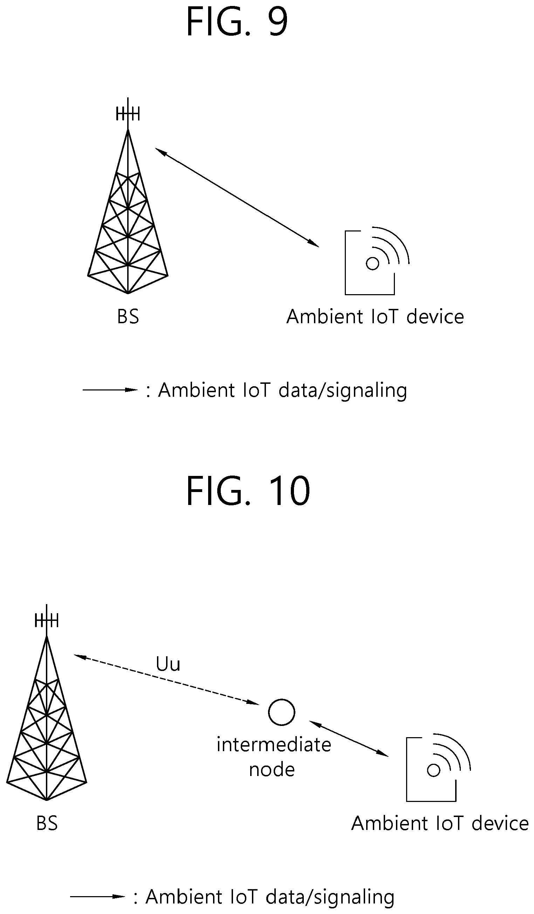

FIG. 9 shows a topology (e.g., topology 1) directly connected between a base station and an A-IoT device, based on an embodiment of the present disclosure. The embodiment of FIG. 9 may be combined with various embodiments of the present disclosure.

Referring to FIG. 9, an A-IoT device may communicate with a base station directly and bi-directionally. For example, communication between a base station and an A-IoT device may include A-IoT data and/or signals. For example, A-IoT data and/or signals may be transmitted or received based on a control channel and/or a data channel (e.g., shared channel). In the embodiment of FIG. 9, a base station transmitting to an A-IoT device and a base station receiving from an A-IoT device may be different. For example, in topology 1, a base station in a micro-cell environment and an A-IoT device may perform mutual direct communication. For example, a base station may be located co-site with a base station equipped with existing 3GPP technology.

FIG. 10 shows a topology (e.g., topology 2) in which a base station and an A-IoT device are connected through an intermediate node, based on an embodiment of the present disclosure. The embodiment of FIG. 10 may be combined with various embodiments of the present disclosure.

Referring to FIG. 10, an A-IoT device may communicate bi-directionally with an intermediate node between the device and a base station. Herein, for example, the intermediate node may be a relay, an integrated access backhaul (IAB) node, a UE, a repeater, etc., capable of A-IoT. For example, an intermediate node may transmit A-IoT data and/or signals between a base station and an A-IoT device. For example, A-IoT data and/or signals may be transmitted or received based on a control channel and/or a data channel (e.g., shared channel). In the embodiment of FIG. 10, an intermediate node transmitting to an A-IoT device and an intermediate node receiving from an A-IoT device may be different. For example, in topology 2, an intermediate node may exist between a base station in a macro-cell environment and an A-IoT device. For example, a base station may be located co-site with a base station equipped with existing 3GPP technology. For example, an intermediate node may be limited to a UE, and an intermediate node may be located indoors.

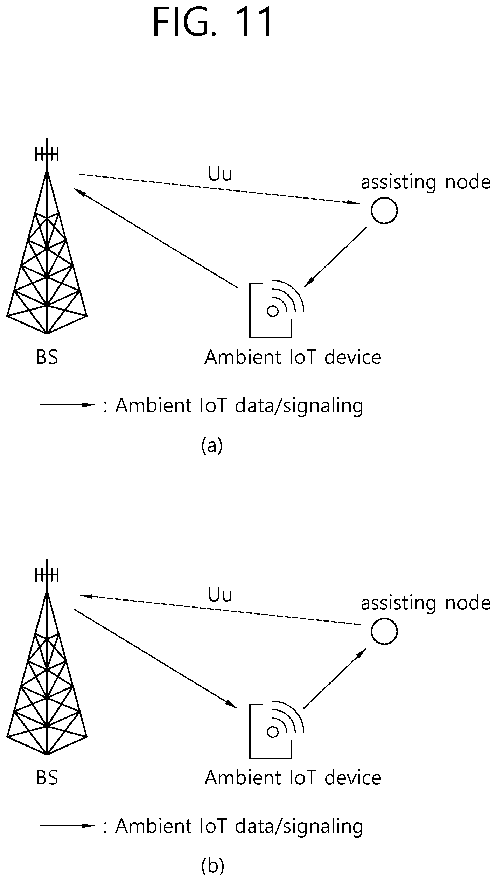

FIG. 11 shows a topology (e.g., topology 3) supported by an assisting node, based on an embodiment of the present disclosure. The embodiment of FIG. 11 may be combined with various embodiments of the present disclosure.

Referring to (a) of FIG. 11, an assisting node may be supported for downlink reception. For example, an A-IoT device may transmit data/signals to a base station, and an A-IoT device may receive data/signals from an assisting node. Referring to (b) of FIG. 11, an assisting node may be supported for uplink transmission. For example, an A-IoT device may receive data/signals from a base station, and an A-IoT device may transmit data/signals to an assisting node. Herein, for example, the assisting node may be a relay, an IAB node, a UE, a repeater, etc., capable of A-IoT.

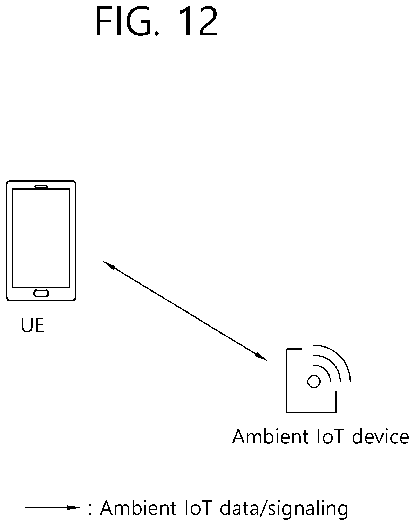

FIG. 12 shows a topology (e.g., topology 4) directly connected between a UE and an A-IoT device, based on an embodiment of the present disclosure. The embodiment of FIG. 12 may be combined with various embodiments of the present disclosure.

Referring to FIG. 12, an A-IoT device may communicate bi-directionally with a UE. For example, communication between a UE and an A-IoT device may include A-IoT data and/or signals. For example, A-IoT data and/or signals may be transmitted or received based on a control channel and/or a data channel (e.g., shared channel).

For example, transmission by an A-IoT device may be performed in a frequency division duplexing (FDD) spectrum (e.g., FDD UL spectrum).

For example, types of A-IoT devices may be classified into two as follows. For example, a type 1 device may have a maximum power consumption value of about 1 uW, allow energy storage, include no amplification function, and perform transmission by backscattering a carrier wave (CW) provided from an outside (e.g., a reader such as a base station or a UE, or a separate node). For example, a type 2 device may have a maximum power consumption value of about several hundred uW, allow energy storage, include an amplification function, and perform transmission by backscattering a carrier wave (CW) provided from an outside (e.g., a reader such as a base station or a UE, or a separate node) or by using a signal generated internally by itself.

For example, in addition to the above-described classification schemes, a type/class of an A-IoT device may be distinguished based on parameters associated with device characteristics (e.g., presence or absence/capacity of energy storage, degree of energy/power consumption, presence or absence/capability of amplification, presence or absence/capability of a band-pass filter (BPF), supported DL/UL transmission scheme(s), etc.) or a combination of the parameters. Herein, for example, BPF capability may be distinguished based on a 3-dB bandwidth, sharpness, etc. of a supported BPF, and UL transmission schemes may be distinguished into, for example, backscattering UL transmission, UL transmission by internal signal generation, and the like.

Also, a type/class of an A-IoT device may be subdivided based on the parameters associated with device characteristics (e.g., presence or absence/capacity of energy storage, degree of energy/power consumption, presence or absence/capability of amplification, presence or absence/capability of a band-pass filter (BPF), supported DL/UL transmission scheme(s), etc.) or a combination of the parameters. For example, the above-described type 2 device may be distinguished into type 2a when performing transmission by backscattering a carrier wave (CW) provided from an outside (e.g., a reader such as a base station or a UE, or a separate node), and type 2b when performing transmission by using a signal generated internally by itself. In this case, type 2a and type 2b may be identical in that they have a maximum power consumption value of about several hundred uW, allow energy storage, and include an amplification function.

For example, in a case of some types/classes of A-IoT devices (e.g., device B, device C, type 1 device, and/or type 2 device), energy storage capability (e.g., a capacitor or a charging battery) may be equipped for the following purposes.
- Securing stable energy at a time of reception/transmission
- Operating a low-power communication module through energy storage in a low RF energy state

For example, a minimum RF reception sensitivity for operating a low-power communication module may be -20dBm, and a minimum reception sensitivity for energy harvesting may be -20dBm. In this case, when reception power of an A-IoT device is distributed between -30 and -20dBm, communication may be impossible if there is no capacitor, and communication can be possible after a charging time if there is a capacitor.
- Operating a low-power communication module at a desired time by accumulating energy harvested based on different energy sources (e.g., solar, thermal, wind, kinetic, etc.) in one capacitor

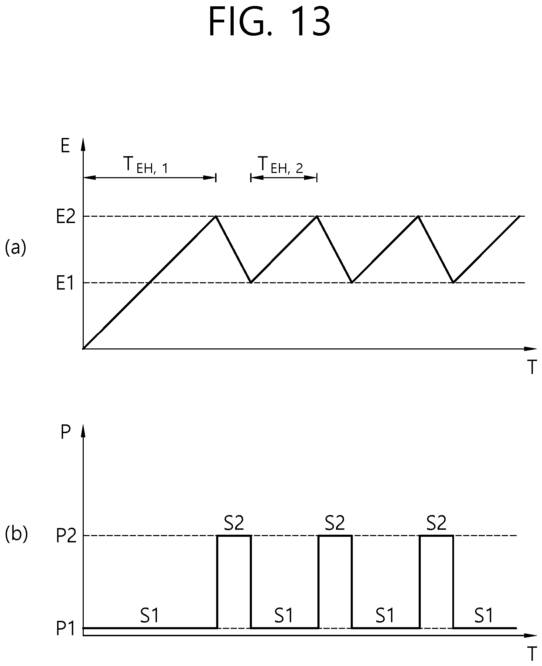

FIG. 13 shows examples of a device energy state and power consumption according to an operation state of an energy harvesting-based device equipped with energy storage capability, based on an embodiment of the present disclosure. The embodiment of FIG. 13 may be combined with various embodiments of the present disclosure.

Referring to (b) of FIG. 13, S1 may be a sleep state, S2 may be an active state, and P1 and P2 may be power consumption in S1 and S2, respectively. For example, an active state may refer to a state in which a device consumes power in order to perform operations such as reception/transmission for communication, sensing, etc., and a sleep state may be a state other than an active state.

(a) of FIG. 13 may show a device energy state corresponding to (b) of FIG. 13. Referring to (a) of FIG. 13, an E1 value and an E2 value may be different for each device (type/class), and a device may report information related to the E1 value and/or information related to the E2 value to an R and/or a base station as a capability parameter. For example, the E2 value may be defined as an energy value in a fully charged state, and the E1 value may be defined as a minimum energy value required in an active state.

For example, a transition from S1 to S2 may be possible only in a case where a device energy state value is E2 or a case where the device energy state value reaches E2. For example, a transition from S1 to S2 may be possible in a case where a device energy state value is greater than E1 (i.e., a range between E1 and E2). The embodiment of FIG. 13 shows an example in which the transition from S1 to S2 is performed in a case where the device energy state value is E2 or a case where the device energy state value reaches E2.

For example, an A-IoT device may require a CW provided from an outside for backscattering transmission. For example, a CW may be used as a CW for supplying energy to A-IoT devices or for DL transmission, regardless of a transmission mode (e.g., backscattering transmission or internally generated transmission).

For example, a CW waveform may be supported in various types. For example, a type of a CW waveform may be a CW waveform type configured with a single-tone or a somewhat complex CW waveform type configured with multi-tone. For example, since a single-tone CW uses fewer resources, it may be advantageous compared to a multi-tone CW in terms of multiplexing capacity of a tag or a reader, and in terms of interference. On the other hand, for example, in a case of a multi-tone CW, more energy can be delivered when transmitting a CW in DL, and there are advantages such as being able to secure a larger coverage in terms of a single device.

Considering advantages between these different CW waveform types, multiple CW waveform types may be supported in an A-IoT system, and a base station/IN/AN/UE may configure a CW waveform type. For example, one or more CW waveform types supported in the A-IoT communication system may be pre-configured/defined, and the base station/IN/AN/UE may select one of the supported one or more CW waveform types and transmit it to an A-IoT device. For example, the base station/IN/AN/UE may configure/instruct/indicate the selected CW waveform type to the A-IoT device in the form of a command/message transmitted as a preamble/frame-sync or a payload.

In the present disclosure, the CW may refer to a carrier wave or a continuous wave. For example, the term "carrier wave" and the term "continuous wave" may be replaced with each other.

Meanwhile, it may be inefficient in terms of resource use and/or in terms of interference occurrence for a base station or an assisting node to continuously transmit an RF signal and/or a CW signal for a processing operation and a transmission operation of an IoT UE (e.g., an A-IoT UE). Also, when an A-IoT operation (e.g., a communication scheme of a CW signal and a backscattering signal corresponding thereto) operates/coexists within a homogeneous/heterogeneous RAT such as NR RAT, LTE RAT, 6G RAT, etc., mutual interference may occur and mutual connectivity may be inefficient.

In embodiment(s) of the present disclosure, embodiment(s) for communication between UEs or communication between a base station and a UE is not limited to each, and can be applied by extending ideas of the present disclosure for each other again.

Various embodiments of the present disclosure may be applied differently based on communication between a UE and a base station and/or communication between IoT UEs and/or communication between an IoT UE and an assisting node and/or communication between a base station and an assisting node.

Various embodiments of the present disclosure may be applied differently based on continuous wave signal transmission for signal transmission of a backscattering scheme and/or RF signal transmission for energy acquisition for a processing operation of an IoT UE and/or a signal for providing control and/or data information to an IoT UE.

In embodiment(s) of the present disclosure, for convenience of description, a continuous wave (CW) signal may be defined as at least one of the following.
1) A transmitting node may transmit a signal such that a receiving node can generate/obtain operating energy.
2) A receiving node may receive a carrier wave signal and transmit a signal to a transmitting node in a backscattering scheme or a reflected form. For example, the signal transmitted by the receiving node may be in the form of a modulated signal generated by converting frequency and/or time and/or phase and/or amplitude, etc. of the continuous wave signal.

For example, the form of a CW for reception of operating energy for metering/sensing/processing of the UE and the form of a CW for transmission of a backscattering signal of the UE may be different. For example, in a case for the backscattering signal, information may not be included in the CW, or it may be in a pre-defined/(pre-)configured form, and/or subcarrier spacing (SCS) may be different and/or it may be (pre-)configured separately. For example, an SCS for the CW may be (pre-)configured to be smaller than and/or equal to an SCS for a signal for transmission of general control/data and/or an RF signal for reception of operating energy. For example, it may be allowed that the SCS for the CW is configured to be smaller than 15 kHz.

For example, a base station and/or an assisting node may basically periodically transmit an RF signal for energy reception of an IoT UE (hereinafter, an energy harvesting signal) and/or a CW signal for a backscattering operation of the IoT UE. For example, a period value for the periodic transmission may be (pre-)configured for each resource pool and/or for each UE and/or for each service type and/or for each QoS parameter and/or for each energy harvesting signal or CW signal.

For example, the IoT UE may transmit a signal for requesting transmission of the energy harvesting signal and/or the CW signal to the base station and/or the assisting node. For example, the request signal may include information related to a type of the requesting signal (the energy harvesting signal and/or the CW signal) and/or information related to a time interval in which the signal is to be transmitted or is preferred to be transmitted and/or information related to transmission of the IoT UE (e.g., a buffer status and/or a packet delay budget and/or a transmission target) and/or information related to whether an additional transmission of the energy harvesting signal or the CW signal is necessary.

For example, if the base station and/or the assisting node receives the request signal for the energy harvesting signal and/or the CW signal from the IoT UE and/or if the base station and/or the assisting node receives a backscatter signal for the previously transmitted CW signal from the IoT UE, the base station and/or the assisting node may transmit the energy harvesting signal and/or the CW signal within a first time interval from the time and/or after a first time offset from the time. For example, if the IoT UE transmits the request signal for the energy harvesting signal and/or the CW signal and/or if the IoT UE transmits a backscatter signal for the previously received CW signal, the IoT UE may expect to receive the energy harvesting signal and/or the CW signal within the first time interval from the time and/or after the first time offset from the time. For example, the first time offset and/or the first time interval may be a pre-defined value and/or a (pre-)configured value.

For example, if the base station and/or the assisting node receives a control/data signal from the IoT UE and/or if a decoding failure for the data is determined and/or if it is determined that retransmission for the control/data of the IoT UE is necessary, the base station and/or the assisting node may transmit an energy harvesting signal and/or a CW signal within a second time interval after a second time offset from the time or from the time or from the time when the control/data signal is received. A basis for this may be for the IoT UE to receive a retransmission indication control from the base station and/or the assisting node and/or to obtain processing energy for preparing for retransmission. For example, if the base station and/or the assisting node receives a control/data signal from the IoT UE and/or if a decoding failure for the data is determined and/or if it is determined that retransmission for the control/data of the IoT UE is necessary, the base station and/or the assisting node may transmit an energy harvesting signal and/or a control and/or data signal (indicating retransmission) to the IoT UE, and/or the base station and/or the assisting node may transmit an energy harvesting signal and/or a CW signal within a third time interval after a third time offset from the time. For example, the second time offset and/or the second time interval and/or the third time offset and/or the third time interval may be a pre-defined value and/or a (pre-)configured value and/or a value indicated in control/data transmitted by the base station or the assisting node.

For example, resource information and/or time information for a CW signal transmitted by the base station and/or the assisting node may be indicated through control/data transmitted by the base station and/or the assisting node.

For example, when transmitting an energy harvesting signal and/or a CW signal and/or control/data to the IoT UE, the base station and/or the assisting node may provide information related to the base station and/or the assisting node and/or information related to a communication target IoT UE to be turn-on (a node ID and/or a target service type) and/or information related to a reference point for an absolute time such as SFN0 or DFN0 information and/or information related to a reference point for an absolute or relative frequency such as Point A. An advantage for this is in efficiently managing overlap and interference between transmission resources between IoT UEs.

For example, an energy harvesting signal and/or a CW signal may be in the form of occupying specific subchannel(s) and/or PRB(s) and/or slot(s) and/or symbol(s). For example, a resource position in a time domain and/or a frequency domain for a backscatter signal derived from a CW signal may be indicated by a node transmitting the CW signal through an energy harvesting signal and/or a control/data signal and/or may be (pre-)configured. For example, information related to the resource position may be in the form of relative frequency domain offset and/or time domain offset information based on the resource position of the CW corresponding to the backscatter signal. For example, the time domain offset may be an absolute offset based on SFN0 or DFN0.

For example, a node transmitting a backscatter signal may determine a resource position in a time domain and/or a frequency domain for the backscatter signal derived from a CW signal, and/or candidate offset values for the time domain and/or the frequency domain relative to the resource position of the CW signal corresponding to the backscatter signal may be (pre-)configured and/or indicated in the CW signal and/or the previous energy harvesting signal and/or control/data.

For example, in resource (re)selection, the UE may determine an available candidate resource set and/or may select transmission resource(s) by avoiding or deprioritizing occupied resources for an energy harvesting signal and/or a CW signal (obtained through reserved resource information) and/or a backscatter signal to be derived from the CW signal or candidate resource(s) therefor.

For example, when (re)selecting a resource for an energy harvesting signal and/or a CW signal, the UE may determine an available candidate resource set and/or may select transmission resource(s) such that occupied resources for a CW signal and/or a backscatter signal to be derived from the CW signal or candidate resource(s) therefor do not overlap with other reserved resources (obtained through resource reservation information) or are deprioritized.

For example, occupied resources for an energy harvesting signal and/or a CW signal may be indicated through a previous CW signal and/or an energy harvesting signal and/or control and/or data.

The embodiment(s) of the present disclosure may be different and/or (pre-)configured per resource pool and/or per transmission outside and/or within a resource pool and/or per QoS parameter and/or per channel access priority class (CAPC) and/or per SL priority and/or per SL channel type and/or per SL BWP and/or per SL carrier and/or per congestion control level and/or per transmission operation or reception operation and/or per transmit power level and/or per transmission start time and/or per cast type and/or per SL HARQ- ACK feedback enabled or disabled and/or per HARQ-ACK feedback option and/or per number of transmission attempts for the same information or TB. In the embodiment(s) of the present disclosure, (pre-)configuration may be performed per resource pool and/or per transmission outside and/or within a resource pool and/or per QoS parameter and/or per SL priority and/or per SL channel type and/or per SL BWP and/or per SL carrier and/or per congestion control level and/or per transmission operation or reception operation and/or per transmit power level and/or per transmission start time and/or per cast type and/or per SL HARQ- ACK feedback enabled or disabled and/or per HARQ-ACK feedback option and/or per number of transmission attempts for the same information or TB.

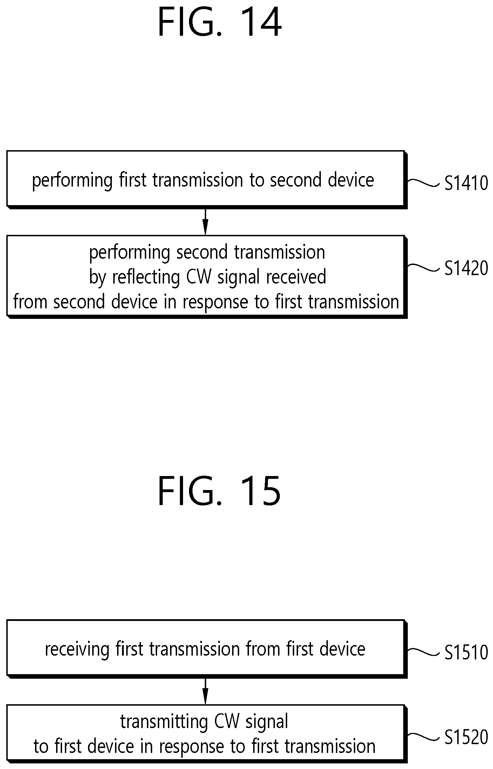

FIG. 14 shows a method for a first device to perform wireless communication, based on an embodiment of the present disclosure. The embodiment of FIG. 14 may be combined with various embodiments of the present disclosure.

Referring to FIG. 14, in step S1410, the first device may perform first transmission to a second device. In step S1420, the first device may perform second transmission by reflecting a carrier wave (CW) signal received from the second device in response to the first transmission. For example, the first transmission may include at least one of data or information for requesting the CW signal.

For example, the information for requesting the CW signal may include information related to a preferred time for transmission or reception of the CW signal.

For example, the information for requesting the CW signal may include information related to the second transmission performed by reflecting the CW signal. For example, the information related to the second transmission may include at least one of information related to a buffer status of the first device, information related to a packet delay budget (PDB) of the second transmission, or information related to a target of the second transmission.

For example, the information for requesting the CW signal may include information related to whether transmission of an additional CW signal is required.

For example, the second transmission may be performed to the second device.

For example, the second transmission may be performed to a third device other than the second device.

For example, based on the first transmission including the information for requesting the CW signal, the CW signal may be received from the second device within a first time after a first time offset from the first transmission.

For example, based on retransmission for the data included in the first transmission being required, the CW signal may be received from the second device within a second time after a second time offset from the first transmission.

For example, information related to a resource for the CW signal may be scheduled through at least one of control information or data received from the second device.

For example, a resource for the second transmission performed by reflecting the CW signal may be determined based on a resource for the CW signal.

For example, the CW signal may be received based on a slot or a symbol in a time domain, and a subchannel or a resource block (RB) in a frequency domain.

For example, a resource for the CW signal or a resource for the second transmission performed by reflecting the CW signal may be excluded from a set of candidate resources of the first device in a resource selection procedure.

The proposed method can be applied to devices based on various embodiments of the present disclosure. First, the processor 102 of the first device 100 may control the transceiver 106 to perform first transmission to a second device. In addition, the processor 102 of the first device 100 may control the transceiver 106 to perform second transmission by reflecting a carrier wave (CW) signal received from the second device in response to the first transmission. For example, the first transmission may include at least one of data or information for requesting the CW signal.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: performing first transmission to a second device; and performing second transmission by reflecting a carrier wave (CW) signal received from the second device in response to the first transmission. For example, the first transmission may include at least one of data or information for requesting the CW signal.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: performing first transmission to a second device; and performing second transmission by reflecting a carrier wave (CW) signal received from the second device in response to the first transmission. For example, the first transmission may include at least one of data or information for requesting the CW signal.

Based on an embodiment of the present disclosure, a non-transitory computer-readable storage medium storing instructions may be provided. For example, the instructions, when executed, may cause a first device to perform operations comprising: performing first transmission to a second device; and performing second transmission by reflecting a carrier wave (CW) signal received from the second device in response to the first transmission. For example, the first transmission may include at least one of data or information for requesting the CW signal.

FIG. 15 shows a method for a second device to perform wireless communication, based on an embodiment of the present disclosure. The embodiment of FIG. 15 may be combined with various embodiments of the present disclosure.

Referring to FIG. 15, in step S1510, the second device may receive first transmission from a first device. In step S1520, the second device may transmit a carrier wave (CW) signal to the first device in response to the first transmission. For example, second transmission of the first device may be performed by reflecting the CW signal. For example, the first transmission may include at least one of data or information for requesting the CW signal.

For example, the information for requesting the CW signal may include information related to a preferred time for transmission or reception of the CW signal.

For example, the information for requesting the CW signal may include information related to the second transmission performed by reflecting the CW signal. For example, the information related to the second transmission may include at least one of information related to a buffer status of the first device, information related to a packet delay budget (PDB) of the second transmission, or information related to a target of the second transmission.

For example, the information for requesting the CW signal may include information related to whether transmission of an additional CW signal is required.

For example, the second transmission may be performed to the second device.

For example, the second transmission may be performed to a third device other than the second device.

For example, based on the first transmission including the information for requesting the CW signal, the CW signal may be transmitted to the first device within a first time after a first time offset from the first transmission.

For example, based on retransmission for the data included in the first transmission being required, the CW signal may be transmitted to the first device within a second time after a second time offset from the first transmission.

For example, information related to a resource for the CW signal may be scheduled through at least one of control information or data transmitted by the second device.

For example, a resource for the second transmission performed by reflecting the CW signal may be determined based on a resource for the CW signal.

For example, the CW signal may be transmitted based on a slot or a symbol in a time domain, and a subchannel or a resource block (RB) in a frequency domain.

For example, a resource for the CW signal or a resource for the second transmission performed by reflecting the CW signal may be excluded from a set of candidate resources of the first device in a resource selection procedure.

The proposed method can be applied to devices based on various embodiments of the present disclosure. First, the processor 202 of the second device 200 may control the transceiver 206 to receive first transmission from a first device. In addition, the processor 202 of the second device 200 may control the transceiver 206 to transmit a carrier wave (CW) signal to the first device in response to the first transmission. For example, second transmission of the first device may be performed by reflecting the CW signal. For example, the first transmission may include at least one of data or information for requesting the CW signal.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: receiving first transmission from a first device; and transmitting a carrier wave (CW) signal to the first device in response to the first transmission. For example, second transmission of the first device may be performed by reflecting the CW signal. For example, the first transmission may include at least one of data or information for requesting the CW signal.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: receiving first transmission from a first device; and transmitting a carrier wave (CW) signal to the first device in response to the first transmission. For example, second transmission of the first device may be performed by reflecting the CW signal. For example, the first transmission may include at least one of data or information for requesting the CW signal.

Based on an embodiment of the present disclosure, a non-transitory computer-readable storage medium storing instructions may be provided. For example, the instructions, when executed, may cause a second device to perform operations comprising: receiving first transmission from a first device; and transmitting a carrier wave (CW) signal to the first device in response to the first transmission. For example, second transmission of the first device may be performed by reflecting the CW signal. For example, the first transmission may include at least one of data or information for requesting the CW signal.

Based on various embodiments of the present disclosure, the UE may receive an RF signal and/or a CW signal for a processing operation and/or a transmission operation, based on a request and/or based on a demand for retransmission. Through this, resource waste problems, interference problems, and the like occurring due to continuous transmission of the RF signal and/or the CW signal can be alleviated. Furthermore, an A-IoT operation can efficiently operate/coexist within a homogeneous/heterogeneous RAT such as an NR RAT, an LTE RAT, or a 6G RAT.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

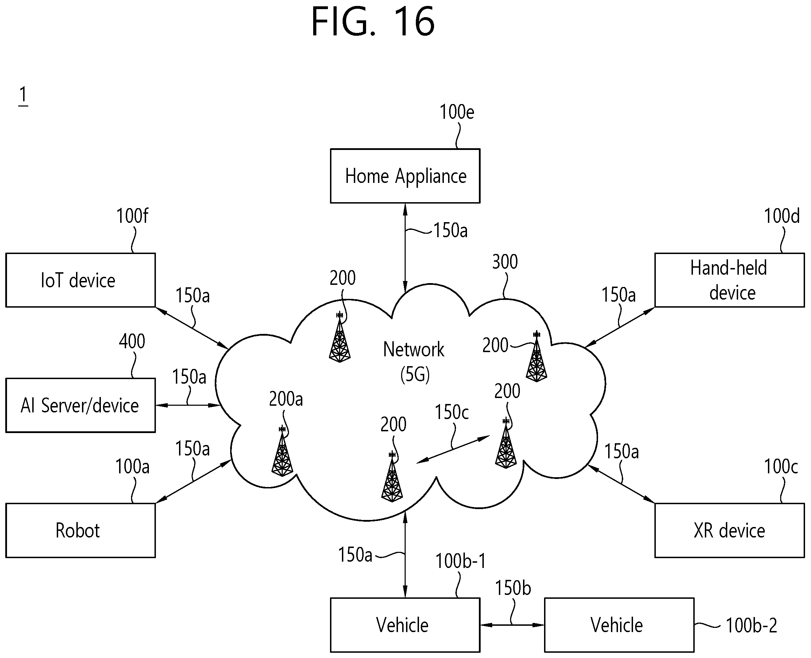

FIG. 16 shows a communication system 1, based on an embodiment of the present disclosure. The embodiment of FIG. 16 may be combined with various embodiments of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

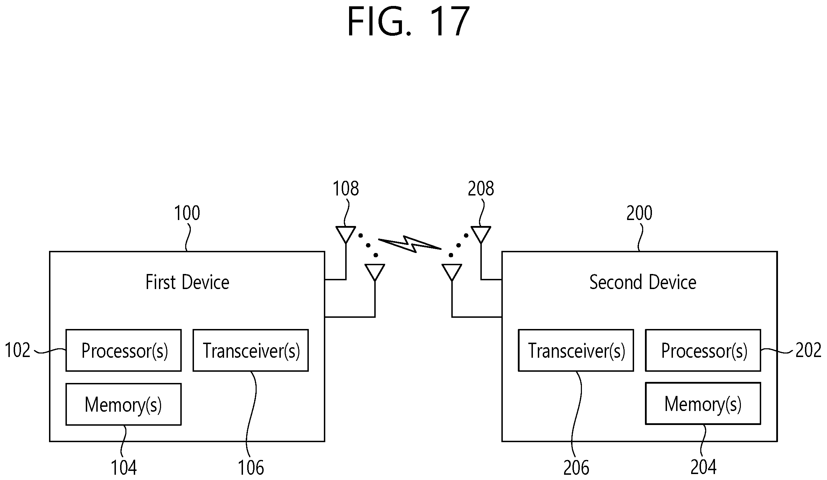

FIG. 17 shows wireless devices, based on an embodiment of the present disclosure. The embodiment of FIG. 17 may be combined with various embodiments of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

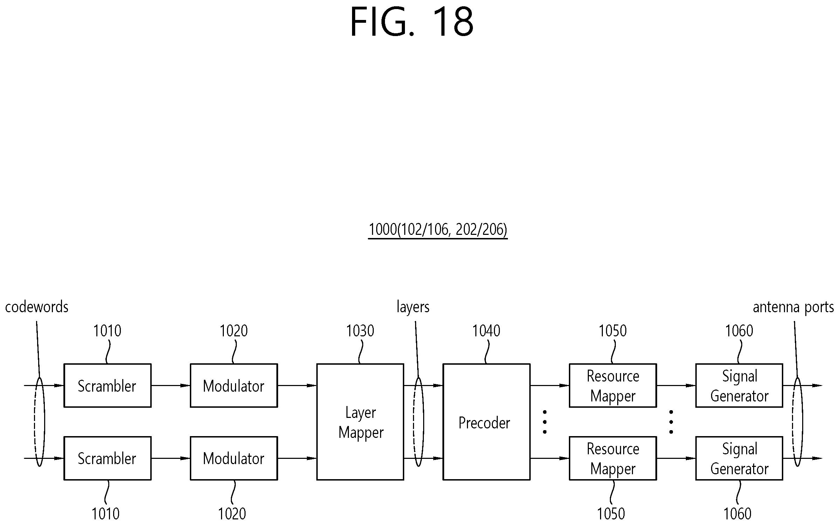

FIG. 18 shows a signal process circuit for a transmission signal, based on an embodiment of the present disclosure. The embodiment of FIG. 18 may be combined with various embodiments of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

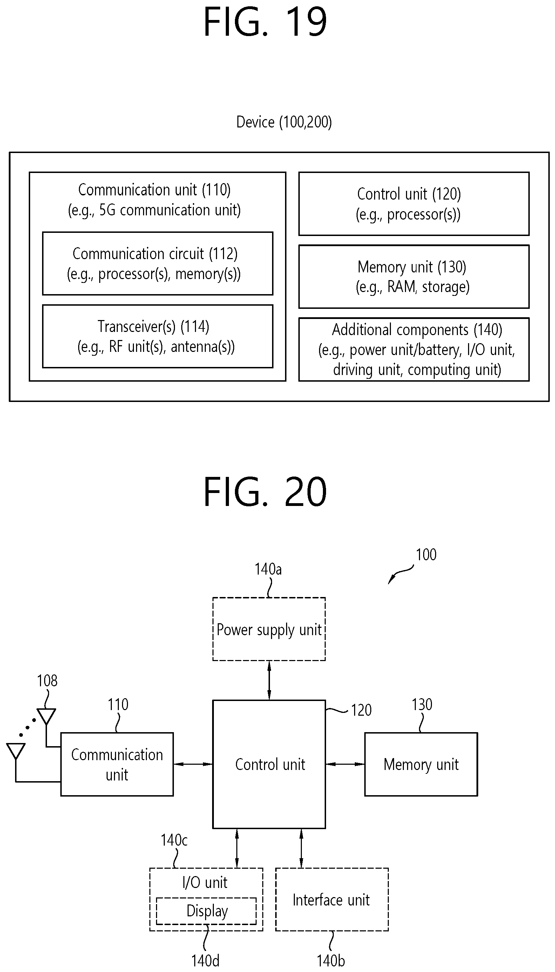

FIG. 19 shows another example of a wireless device, based on an embodiment of the present disclosure. The wireless device may be implemented in various forms according to a use-case/service (refer to FIG. 16). The embodiment of FIG. 19 may be combined with various embodiments of the present disclosure.

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 20 may be combined with various embodiments of the present disclosure.

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

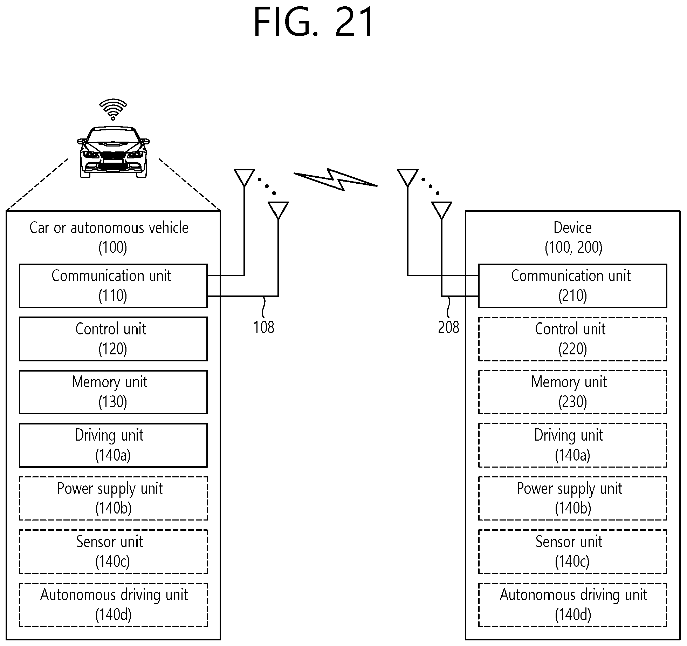

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 21 may be combined with various embodiments of the present disclosure.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
performing first transmission to a second device; and
performing second transmission by reflecting a carrier wave (CW) signal received from the second device in response to the first transmission,
wherein the first transmission includes at least one of data or information for requesting the CW signal.

2. The method of claim 1, wherein the information for requesting the CW signal includes information related to a preferred time for transmission or reception of the CW signal.

3. The method of claim 1, wherein the information for requesting the CW signal includes information related to the second transmission performed by reflecting the CW signal.

4. The method of claim 3, wherein the information related to the second transmission includes at least one of information related to a buffer status of the first device, information related to a packet delay budget (PDB) of the second transmission, or information related to a target of the second transmission.

5. The method of claim 1, wherein the information for requesting the CW signal includes information related to whether transmission of an additional CW signal is required.

6. The method of claim 1, wherein the second transmission is performed to the second device.

7. The method of claim 1, wherein the second transmission is performed to a third device other than the second device.

8. The method of claim 1, wherein, based on the first transmission including the information for requesting the CW signal, the CW signal is received from the second device within a first time after a first time offset from the first transmission.

9. The method of claim 1, wherein, based on retransmission for the data included in the first transmission being required, the CW signal is received from the second device within a second time after a second time offset from the first transmission.

10. The method of claim 1, wherein information related to a resource for the CW signal is scheduled through at least one of control information or data received from the second device.

11. The method of claim 1, wherein a resource for the second transmission performed by reflecting the CW signal is determined based on a resource for the CW signal.

12. The method of claim 1, wherein the CW signal is received based on a slot or a symbol in a time domain, and a subchannel or a resource block (RB) in a frequency domain.

13. The method of claim 1, wherein a resource for the CW signal or a resource for the second transmission performed by reflecting the CW signal is excluded from a set of candidate resources of the first device in a resource selection procedure.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
performing first transmission to a second device; and
performing second transmission by reflecting a carrier wave (CW) signal received from the second device in response to the first transmission,
wherein the first transmission includes at least one of data or information for requesting the CW signal.

15. A processing device adapted to control a first device, the processing device comprising:
at least one processor; and
at least one memory connected to the at least one processor and storing instructions that, based on being executed by the at least one processor, cause the first device to perform operations comprising:
performing first transmission to a second device; and
performing second transmission by reflecting a carrier wave (CW) signal received from the second device in response to the first transmission,
wherein the first transmission includes at least one of data or information for requesting the CW signal.

16. A non-transitory computer-readable storage medium storing instructions that, when executed, cause a first device to perform operations comprising:
performing first transmission to a second device; and
performing second transmission by reflecting a carrier wave (CW) signal received from the second device in response to the first transmission,
wherein the first transmission includes at least one of data or information for requesting the CW signal.

17. A method for performing wireless communication by a second device, the method comprising:
receiving first transmission from a first device; and
transmitting a carrier wave (CW) signal to the first device in response to the first transmission,
wherein second transmission of the first device is performed by reflecting the CW signal, and
wherein the first transmission includes at least one of data or information for requesting the CW signal.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
receiving first transmission from a first device; and
transmitting a carrier wave (CW) signal to the first device in response to the first transmission,
wherein second transmission of the first device is performed by reflecting the CW signal, and
wherein the first transmission includes at least one of data or information for requesting the CW signal.

19. A processing device adapted to control a second device, the processing device comprising:
at least one processor; and
at least one memory connected to the at least one processor and storing instructions that, based on being executed by the at least one processor, cause the second device to perform operations comprising:
receiving first transmission from a first device; and
transmitting a carrier wave (CW) signal to the first device in response to the first transmission,
wherein second transmission of the first device is performed by reflecting the CW signal, and
wherein the first transmission includes at least one of data or information for requesting the CW signal.

20. A non-transitory computer-readable storage medium storing instructions that, when executed, cause a second device to perform operations comprising:
receiving first transmission from a first device; and
transmitting a carrier wave (CW) signal to the first device in response to the first transmission,
wherein second transmission of the first device is performed by reflecting the CW signal, and
wherein the first transmission includes at least one of data or information for requesting the CW signal.
